(19) Europäisches Patentamt
European Patent Office
Office européen des brevets

(11) Veröffentlichungsnummer: **0 147 365**
**A2**

(12) **EUROPÄISCHE PATENTANMELDUNG**

(21) Anmeldenummer: **84810521.9**

(22) Anmeldetag: **29.10.84**

(51) Int. Cl.⁴: **A 01 N 25/32**
A 01 N 47/36

(30) Priorität: **03.11.83 CH 5929/83**

(43) Veröffentlichungstag der Anmeldung:
**03.07.85 Patentblatt 85/27**

(84) Benannte Vertragsstaaten:
**AT BE CH DE FR GB IT LI NL**

(71) Anmelder: **CIBA-GEIGY AG**
**Postfach**
**CH-4002 Basel(CH)**

(72) Erfinder: **Bellucci, Sergio, Dr.**
**Kapellstrasse 121**
**CH-4323 Wallbach(CH)**

(72) Erfinder: **Gerber, Hans-Rudolf, Dr.**
**Blözenweg 49**
**CH-4133 Pratteln(CH)**

(54) **Herbizides Mittel.**

(57) Es werden herbizide Mittel beschrieben, welche neben einem

a) herbizid wirksamen Sulfonylharnstoff der Formel

$$Q-SO_2-NH-CO-NH-T \qquad (I)$$

worin Q ein substituierter Phenylrest der Formel

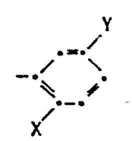

ist, worin X Halogenalkenyl, Alkoxycarbonyl, Alkenyloxy, Halogenalkoxy, Alkoxyalkoxy, Nitro, Y Wasserstoff oder Halogen bedeutet oder Q den 3-Methyl-3,4-dihydro-1,2-benzoxathiin-8-yl-rest darstellt, und T ein substituierter sechsgliedriger heterocyclischer Rest der Formel

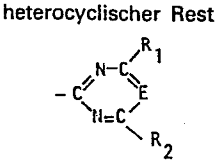

ist, worin E $-CH=$ oder $-N=$, $R_1$ Alkyl, Alkoxy, Halogenalkoxy oder Cyclopropyl, $R_2$ Alkyl, Alkoxy, Halogenalkoxy oder Cyclopropyl bedeutet, wobei $R_1$ und $R_2$ nicht gleichzeitig Methyl sein kann, wenn X Methoxycarbonyl und Y Wasserstoff bedeutet.

b) eine antidotische Verbindung ausgewählt aus Cyanomethoximino-benzacetonitril N,N-Diallyl-dichloracetamid,
2-Chlor-5-benzyloxycarbonyl-3-trifluormethylthiazol,
1,8-Naphthalindicarbonsäure-anhydrid und
3-N-Dichloracetyl-2,2-dimethyl-1,3-oxazolidin enthalten, sowie die Verwendung dieser Mittel zur selektiven Unkrautbekämpfung in Nutzpflanzenkulturen, wie z.B. Getreide, Mais, Reis, Hirse und Soja.

EP 0 147 365 A2

CIBA-GEIGY AG
Basel (Schweiz)

5-14639/+

# Herbizides Mittel

Die Erfindung betrifft ein selektiv wirkendes Mittel, welches als herbiziden Wirkstoff einen Sulfonylharnstoff enthält zusammen mit einer bekannten, antagonistisch wirkenden Substanz (Antidote) ausgewählt aus Cyanobenzacetonitril, N,N-diallyl-dichloroacetamid, 2-Chlor-5-benzyloxycarbonyl-3-trifluormethyl-triazol, 1,8-Naphthalincarbonsäureanhydrid und 3-N-Dichloracetyl-2,2-dimethyl-1,3-oxazolidin, welche die Toleranz der Kulturpflanzen gegenüber der phytotoxischen Wirkung erhöht, ohne dass deswegen die Herbizidwirkung gegenüber den Unkräutern merklich abfällt. Die Erfindung betrifft ebenfalls die Verwendung dieses Mittels zur Unkrautbekämpfung in Nutzpflanzenkulturen.

Sulfonylharnstoffe mit Herbizidwirkung sind bekannt, siehe beispielsweise die US Patentschriften No. 4 127 405, 4 169 719, 4 238 628 und die offengelegten Europäischen Patentanmeldungen EP-A No. 44 807, 99 339 und 108 708.

Gegenüber anderen Herbiziden zeichnen sich diese Sulfonylharnstoffe durch ihre starke Wirkung aus. Aus ökologischer und ökonomischer Sicht ist die Verwendung kleiner Wirkstoffmengen vorteilhaft. Es bringt jedoch auch die Gefahr schädigender Ueberdosierung mit sich. Schadwirkungen sind nicht nur auf Ueberdosierung zurückzuführen, sie können auch auftreten wegen abnormalen klimatischen Verhältnissen oder wegen Vorbehandlung des Bodens.

Es hat sich deshalb als wünschenswert erwiesen die Resistenz oder Toleranz der Kulturpflanzen gegenüber der phytotoxischen Wirkung der Sulfonylharnstoff-Herbizide zu erhalten. Im US Patent No. 4 343 649 wird beschrieben, dass die bekannten Herbizid-Antidoten 1.8-Naphthalinsäureanhydrid, N,N-Diallyldichloracetamid sowie α-Cyano-methoximino-2-phenylacetonitril diese Aufgabe erfüllen, wenn man sie in Nutzpflanzenkulturen gleichzeitig mit dem Sulfonylharnstoff-Herbizid verwendet.

Ueberraschenderweise wurde nun gefunden, dass sich die Toleranz von Kulturpflanzen gegenüber der phytotoxischen Wirkung der Sulfonylharnstoff-Herbizide erhöht, ohne dass dadurch die Herbizidwirkung auf die Grosszahl der Unkräuter und Ungräser beeinträchtigt wird, wenn man die Sulfonharnstoff-Herbizide zusammen mit Oximäthern verwendet welche als Herbizid-Antagonist oder Antidot wirken.

Die Sulfonylharnstoff-Herbizide entsprechen der allgemeinen Formel I

$$Q\text{-}SO_2\text{-}NH\text{-}CO\text{-}NH\text{-}T \qquad (I)$$

worin Q ein substituierter Phenylrest der Formel

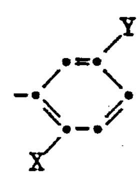

ist, worin X $C_1$-$C_3$ Halogenalkenyl, $C_1$-$C_3$ Alkoxycarbonyl, $C_3$-$C_4$-Alkenyloxy, $C_1$-$C_3$ Halogenalkoxy, $C_1$-$C_3$ Alkoxy-$C_1$-$C_2$-alkoxy, Nitro, Y Wasserstoff oder Halogen bedeutet, oder Q den 3-Methyl-3,4-dihydro-1,2-benzoxathiin-8-yl-rest darstellt, und T ein substituierter, sechsgliedriger heterocyclischer Rest der Formel

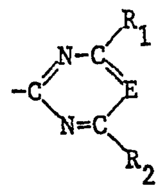

ist, worin E -CH= oder -N=, $R_1$ $C_1$-$C_3$ Alkyl, $C_1$-$C_3$ Alkoxy, $C_1$-$C_3$-Halogenalkoxy oder Cyclopropyl, $R_2$ $C_1$-$C_3$ Alkyl, $C_1$-$C_3$ Alkoxy, $C_1$-$C_3$ Halogenalkoxy oder Cyclopropyl bedeutet, wobei $R_1$ und $R_2$ nicht gleichzeitig Methyl sein kann, wenn X Methoxycarbonyl und Y Wasserstoff bedeuten.

Verbindungen, worin Y = H ist, werden dabei bevorzugt.

- Unter Halogen kann z.B. Fluor, Chlor und Brom, insbesondere aber Chlor verstanden werden.
- Unter Halogenalkenyl kann z.B. Halogenäthanyl, Halogenpropenyl und bevorzugt 3,3,3-Trifluorpropenyl verstanden werden.
- Unter Alkoxycarbonyl kann z.B. Methoxy, Aethoxy, Propoxy oder Isopropoxycarbonyl und bevorzugt Methoxycarbonyl verstanden werden.
- Unter Alkenyloxy kann z.B. Allyloxy, Propenyloxy, Buten-2-yl-oxy, Buten-3-yl-oxy, 1-Methyl-alkyloxy, 2-Methylalkyloxy, 1-Methyl-propenyloxy und 3-Methyl-propenyloxy, insbesondere aber Allyloxy und Buten-2-yl-oxy verstanden werden.
- Unter Halogenalkoxy kann z.B. Halogenmethoxy, Halogenäthoxy, Halogenpropoxy und Halogenisopropoxy, bevorzugt aber Chlormethoxy, Chloräthoxy, Fluormethoxy, Fluoräthoxy, insbesondere bevorzugt als X 2-Chloräthoxy und Pentafluoräthoxy, als $R_1$ Difluormethoxy verstanden werden.
- Unter Alkoxy-alkoxy kann z.B. Methoxy-methoxy, 2-Methoxy-äthoxy, Aethoxy-methoxy, 2-Aethoxy-äthoxy, n-Propoxy-methoxy, Isopropoxymethoxy, 2-n-Propoxy-äthoxy, 2-Isopropoxy-äthoxy, insbesondere aber 2-Methoxy-äthoxy verstanden werden.

- Unter Y kann z.B. Wasserstoff oder Halogen, wie Fluor, Chlor, Brom, insbesondere Wasserstoff oder Chlor verstanden werden.
- Unter Alkyl kann z.B. Methyl, Aethyl, n-Propyl, i-Propyl, bevorzugt aber Methyl verstanden werden.
- Unter Alkoxy kann z.B. Methoxy, Aethoxy, n-Propoxy, i-Propoxy, bevorzugt aber Methoxy und Aethoxy verstanden werden.

Als herbizid besonders wirksame Sulfonylharnstoffe erweisen sich die Verbindungen der Formel I, worin Y = H ist.

Folgende Sulfonylharnstoffe werden als Herbizide insbesondere bevorzugt:
N-[2-(2'-Chloräthoxy)-phenyl-sulfonyl]-N'-(4-methyl-6-methoxy-triazin-2-yl)-harnstoff, N-[2-(2'-Methoxyäthoxy)-phenyl-sulfonyl]-N'-(4-methyl-6-methoxy-triazin-2-yl)-harnstoff, N-[2-(2-Butenyloxy)-phenyl-sulfonyl]-N'-(4-methyl-6-methoxy-triazin-2-yl)-harnstoff, N-[2-(3-Trifluor-propen-1-yl)-phenyl-sulfonyl]-N'-(4-methyl-6-methoxy-triazin-2-yl)-harnstoff, N-(2-Methoxycarbonylphenyl-sulfonyl)-N'-(4-methyl-6-difluormethoxypyrimidin-2-yl)-harnstoff, N-(2-Methoxycarbonylphenyl-sulfonyl)-N'-(4-methyl-6-difluormethoxy-pyrimidin-2-yl)-harnstoff, N-(2-Pentafluoräthoxyphenyl-sulfonyl)-N'-(4,6-dimethoxytriazin-2-yl)-harnstoff, N-(2-Allyloxyphenyl-sulfonyl)-N'-(4-methyl-6-äthoxy-triazin-2-yl)-harnstoff, N-(2-Nitrophenyl-sulfonyl)-N'-(4-methyl-6-difluormethoxy-pyrimidin-2-yl)-harnstoff, N-(2-Methoxycarbonyl-phenyl-sulfonyl)-N'-(4-methyl-6-cyclopropyl-pyrimidin-2-yl)-harnstoff und N-(3-Methyl-3,4-dihydro-1,2-benzoxathiin-8-yl-sulfonyl)-N'-(4-methoxy-6-methyl-pyrimidin-2-yl)-harnstoff.

Als Antidote zu diesen Sulfonylharnstoffen verwendet man eine der folgenden Verbindungen:

a) Cyanomethoximino-benzacetonitril der Formel

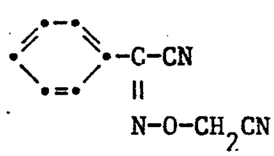

(II)

bekannt aus der DE-OS 2,639,405;

b) N,N-Diallyl-dichloracetamid der Formel

$(CH_2=CH-CH_2)_2N-COCHCl_2$ (III)

bekannt aus der DE-OS 2,218,079;

c) 2-Chlor-5-benzyloxycarbonyl-3-trifluormethyl-triazol der Formel

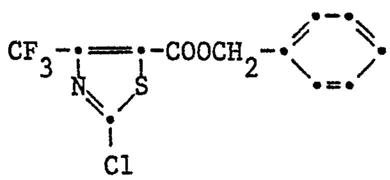

(IV)

bekannt aus der US-PS 4,199,506;

d) 1,8-Naphthalindicarbonsäureanhydrid der Formel

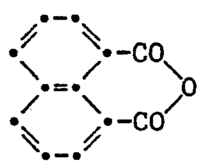

(V)

bekannt aus der DE-OS 1,567,075 und

e) 3-N-Dichloracetyl-2,2-dimethyl-1,3-oxazolidin der Formel

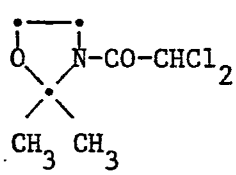

(VI)

bekannt aus der DE-OS 2,218,079.

Als Gegenmittel zu den Sulfonylharnstoffen der Formel I werden erfindungsgemäss die Verbindungen der Formeln II bis VI verwendet.

Diese Verbindungen sind als Safener oder Antidotes für Herbizide mit anderer als Sulfonylharnstoff-Struktur beschrieben worden. Solche Herbizide werden in höheren Aufwandmengen angewendet. Ueberraschenderweise hat es sich nun gezeigt, dass sie auch die Klasse dieser neuen Sulfonylharnstoffe der Formel I, welche eine sehr starke Wirkung aufweisen, kulturspezifisch zu antagonisieren vermögen.

Die Verbindungen der Formeln II bis VI sind zum Schützen von Kulturpflanzen gegen die schädigende Wirkung von Sulfonylharnstoffen geeignet und können daher in bezug auf ihre Anwendung in Kombination mit den vorgenannten Herbiziden als Gegenmittel, "Antidote" oder auch als "Safener" bezeichnet werden.

Ein solches Gegenmittel oder Antidote der kann je nach Anwendungszweck zur Vorbehandlung des Saatgutes der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Antidote kann daher grundsätzlich unabhängig vom Zeitpunkt der Applikation der phytotoxischen Chemikalien erfolgen. Die Behandlung der Pflanzen kann jedoch durch gleichzeitige Applikation von phythotoxischen Chemikalien und Gegenmittel (Tankmischung) erfolgen. Die preemergente Behandlung schliesst sowohl die Behandlung

der Anbaufläche vor der Aussaat (ppi = pre plant incorporation) als auch die Behandlung der angesäten, aber noch nicht bewachsenen Anbauflächen ein.

Die Aufwandmengen des Gegenmittels im Verhältnis zum Herbizid richten sich weitgehend nach der Anwendungsart. Bei einer Feldbehandlung, bei der Herbizid und Gegenmittel entweder gleichzeitig (Tankmischung) oder separat appliziert werden, liegt das Verhältnis der Mengen von Gegenmittel zu Herbizid im Bereich von 1:10 bis 10:1. In der Regel wird bei einem Mengenverhältnis von Gegenmittel zu Herbizid von 1:3 bis 3:1 die volle Schutzwirkung erreicht. Man ermittelt von Fall zu Fall, d.h. je nach verwendetem Herbizid-Typ, welches Verhältnis in bezug auf optimale Wirkung bei der speziellen Kulturpflanze das geeignetste ist. Bei der Samenbeizung und ähnlichen gezielten Schutzmassnahmen werden jedoch weit geringere Mengen Gegenmittel im Vergleich mit den später pro Hektar Anbaufläche verwendeten Mengen an Herbizid benötigt. Im allgemeinen werden bei der Samenbeizung pro kg Samen 0,1 - 50 g Gegenmittel benötigt. In der Regel wird mit 0,5 -4 g Gegenmittel pro kg Samen bereits die volle Schutzwirkung erreicht. Falls das Gegenmittel kurz vor der Aussaat durch Samenquellung appliziert werden soll, so werden zweckmässig Lösungen des Gegenmittels, welche den Wirkstoff in einer Konzentration von 1 - 10'000 ppm enthalten, verwendet. In der Regel wird mit Konzentrationen des Gegenmittels von 10 - 1000 ppm die volle Schutzwirkung erreicht.

In der Regel liegt zwischen protektiven Massnahmen, wie Samenbeizung und Behandlung von Stecklingen mit einem Gegenmittel der Formel II-VI und der möglichen späteren Feldbehandlung mit Agrarchemikalien ein längerer Zeitraum. Vorbehandeltes Saat- und Pflanzengut kann später in Landwirtschaft, Gartenbau und Forstwirtschaft mit unterschiedlichen Chemikalien in Berührung kommen. Die Erfindung bezieht sich daher auch auf protektive Mittel für Kulturpflanzen, die als Wirkstoff ein Gegenmittel der Formel II-VI zusammen mit üblichen Trägerstoffen enthalten. Solche Mittel können gegebenenfalls

zusätzlich jene Agrarchemikalien enthalten, vor deren Einfluss die Kulturpflanze geschützt werden soll.

Als Kulturpflanzen gelten im Rahmen vorliegender Erfindung alle Pflanzen, die in irgendeiner Form Ertragsstoffe, wie Samen, Wurzeln, Stengel, Knollen, Blätter, Blüten, ferner Inhaltsstoffe, wie Oele, Zucker, Stärke, Eiweiss usw., produzieren und zu diesem Zweck angebaut werden. Zu diesen Pflanzen gehören beispielsweise Getreidearten, wie Weizen, Roggen, Gerste und Hafer, daneben vor allem Reis, Sorghum, Mais, Baumwolle, Zuckerrüben, Zuckerrohr, Soja, Bohnen, und Erbsen.

Das Gegenmittel kann überall dort eingesetzt werden, wo eine Kulturpflanze der vorgenannten Art vor der schädlichen Wirkung von Sulfonylharnstoffen der Formel I geschützt werden soll.

Zur Beizung der Samen der Kulturpflanze werden die Samen mit dem Antidot der Formeln II bis VI im gewünschten Mengenverhältnis gründlich vermischt.

Zur Verwendung werden die Verbindungen der Formel I und II-VI in unveränderter Form oder vorzugsweise zusammen mit den in der Formulierungstechnik üblichen Hilfsmitteln eingesetzt und daher z.B. zu Emulsionskonzentraten, direkt versprühbaren und verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I und II bis VI und gegebenenfalls einen festen oder flüssigen Zusatzstoff enthaltenden Mittel, Zubereitungen oder Zusammensetzungen

werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl-.oder Di-octylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I und II-VI nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen sind z.B. die Alkali-, Erdalkali- oder gegebenenfalls substituierten Ammoniumsalze von höheren Fettsäuren ($C_{10}$- $C_{22}$), wie z.B. die Na- oder K-Salze der Oel- oder Stearinsäure, oder von natürlichen Fettsäuregemischen, die z.B. aus Kokosnuss- oder Talgöl gewonnen werden können. Ferner sind auch die Fettsäure-methyltaurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyd-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxyd-Adduktes oder Phospholipide in Frage.

Als nichtionisches Tensid kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 1000 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglycoläther, Polypropylen-Polyäthylenoxyaddukte, Tributylphenoxypolyäthoxyäthanol, Polyäthylenglykol und Octylphenoxypolyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:

"Mc Cutcheon's Detergents and Emulsifiers Annual"
Mc Publishing Corp., Ridgewood, New Jersey, 1979
M. und J. Ash, "Encyclopedia of Surfactants", Vol, I-III
Chemical Publishing Co. Inc. New York 1981-1982
H. Stache "Tensid Taschenbuch" 2. Auflage,
C. Hanser Verlag, München und Wien 1981.

Diese Zubereitungen enthalten in der Regel 0,1 bis 99 %, insbesondere 0,1 bis 95 %, Wirkstoff der Formel I, 1 bis 99 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen betragen in der Regel 0,1 bis 10 kg AS/ha, vorzugsweise 0,25 bis 5 kg AS/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Die Herstellung der Wirksubstanzen der Formel I und II bis VI kann nach bekannten Methoden erfolgen.

Verbindungen der Formel I werden in einem inerten, organischen Lösungsmittel hergestellt.

Nach einem ersten Verfahren werden die Verbindungen der Formel I erhalten, indem man ein Phenylsulfonamid der Formel a

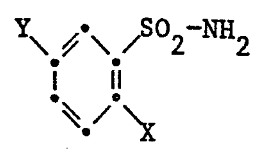

(a),

worin X und Y die unter Formel I gegebene Bedeutung haben, in Gegenwart einer Base mit einem N-Pyrimidinyl- oder -Triazinyl-carbamat der Formel b

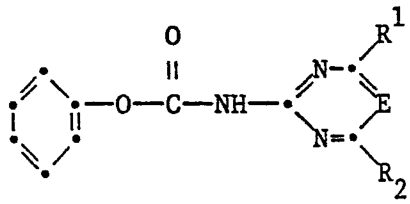

(b),

worin E, $R_1$, $R_2$ die unter Formel I gegebene Bedeutung haben, umsetzt.

Nach einem zweiten Verfahren gelangt man zu Verbindungen der Formel I, indem man ein Phenylsulfonylisocyanat der Formel c

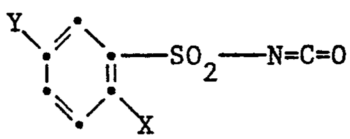

(c),

worin X und Y die unter Formel I gegebene Bedeutung haben, gegebenenfalls in Gegenwart einer Base, mit einem Amin der Formel d

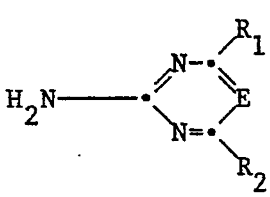

(d),

worin E, $R_1$ und $R_2$ die unter Formel I gegebene Bedeutung haben,

umsetzt.

Nach einem weiteren Verfahren werden Verbindungen der Formel I hergestellt, indem man ein Sulfonamid der oben angegebenen Formel III gegebenenfalls in Gegenwart einer Base mit einem Isocyanat oder Isothiocyanat der Formel e

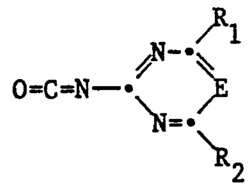

(e),

worin E, $R_1$ und $R_2$ die unter Formel I gegebene Bedeutung haben, umsetzt.

Schliesslich kann man die Verbindungen der Formel I auch erhalten, indem man ein N-Phenylsulfonylcarbamat der Formel f

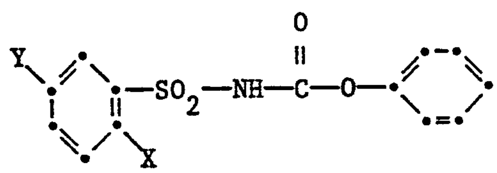

(f),

worin X und Y die unter Formel I gegebene Bedeutung haben, mit einem Amin der oben angegebenen Formel d umsetzt.

Die erhaltenen Harnstoffe der Formel I können gewünschtenfalls mittels Aminen, Alkalimetall- oder Erdalkalimetallhydroxiden oder quaternären Ammoniumbasen in basische Additionsalze übergeführt werden. Dieses geschieht beispielsweise durch Umsetzen mit der äquimolaren Menge Base und Verdampfen des Lösungsmittels.

Die Ausgangsstoffe der Formeln a,c und e können nach folgenden Methoden hergestellt werden:

Die als Zwischenprodukte verwendeten Sulfonamide der Formel a werden aus den entsprechenden Anilinen durch Diazotierung und Austausch der Diazogruppe mit Schwefeldioxid in Gegenwart eines Katalysators wie Kupfer-I-chlorid in Salzsäure oder Essigsäure und Umsetzen des entstandenen Phenylsulfonylchlorids mit Ammoniumhydroxid-Lösung erhalten.

Die Verbindungen der Formel a können auch durch Sauerstoff-Alkylierung resp. Alkenylierung von Hydroxyphenyl-sulfonamiden mit den entsprechenden Halogeniden resp. Schwefelsäureestern erhalten werden.

Die Alkoxyphenylsulfonamide wiederum können aus den entsprechenden Alkoxyaniliden, wie bereits erwähnt oder durch Chlorsulfonylierung von Alkoxybenzolen und Umsatz der erhaltenen Phenylsulfonylchloriden mit Ammoniumhydroxy-Lösung gewonnen werden. Solche Reaktionen sind aus J. Am. Chem. Soc. 62, 603 (1940) bekannt geworden.

Die Phenylsulfonylisocyanate der Formel c können durch Umsetzungen der Sulfonamide der Formel a mit Phosgen in Anwesenheit von Butylisocyanat in einem chlorierten Kohlenwasserstoff als Lösungsmittel, bei Rückflusstemperatur erhalten werden. Aehnliche Darstellungen sind in "Newer Methods of Preparative Organic Chemistry" Band VI, 223-241, Academic Press New York und London, beschrieben.

Die N-Phenylsulfonylcarbamate der Formel b werden durch Umsetzung der Sulfonamide der Formel a mit Diphenylcarbamat in Gegenwart einer Base erhalten. Aehnliche Verfahren sind in der japanischen Patentschrift 61 169 erwähnt.

Die Ausgangsmaterialien der Formeln b,d und e sind bekannt oder können nach bekannten Methoden hergestellt werden.

Durch Umsetzung von Aminen der Formel d mit Oxalylchlorid in chlorierten Kohlenwasserstoffen als Lösungsmittel, lassen sich Isocyanate der Formel e herstellen. Amine der Formel d sind bekannt und zum Teil im Handel erhältlich oder sie können nach bekannten Methoden hergestellt werden, siehe "The Chemistry of Heterocyclic Compounds" Band XIV, Interscience Publishers, New York, London.

Diese Umsetzungen zu Verbindungen der Formel I werden vorteilhafterweise in aprotischen, inerten, organischen Lösungsmitteln vorgenommen, wie Methylenchlorid, Tetrahydrofuran, Acetonitril, Dioxan, Toluol.

Die Reaktionstemperaturen liegen vorzugsweise zwischen -20° und +120°C. Die Umsetzungen verlaufen im allgemeinen leicht exotherm und können bei Raumtemperatur durchgeführt werden. Zwecks Abkürzung der Reaktionszeit oder auch zum Einleiten der Umsetzung wird zweckdienlich für kurze Zeit bis zum Siedepunkt des Reaktionsgemisches

aufgewärmt. Die Reaktionszeiten können ebenfalls durch Zugabe einiger Tropfen Base oder Isocyanat als Reaktionskatalysator verkürzt werden.

Die Endprodukte können durch Einengen und/oder Verdampfen des Lösungsmittels isoliert und durch Umkristallisation oder Zerreiben des festen Rückstandes in Lösungsmitteln in denen sie sich nicht gut lösen, wie Aether, aromatischen Kohlenwasserstoffen oder chlorierten Kohlenwasserstoffen gereinigt werden.

Die Verbindungen der Fromeln II-VI sind bekannt. Ihre Herstellung kann aus gegebenen Literaturangaben antnommen werden: DE-OS 1,567,075, 2,218,079, 2,639,405 und US-PS 4,199,506.

Als Herbizide werden in den folgenden Beispielen folgende Sulfonylharnstoffe geprüft:

A 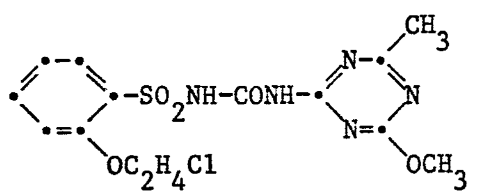 Smp. 174-175°

N-(2-β-Chloräthoxyphenylsulfonyl)-N'-(4-methoxy-6-methyl-triazin-2-yl)-harnstoff.

B 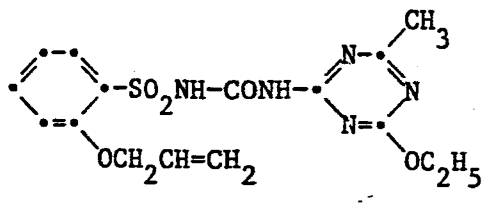 Smp. 129-131°

N-(2-Allyloxyphenylsulfonyl)-N'-(4-äthoxy-6-methyl-triazin-2-yl)-harnstoff.

C 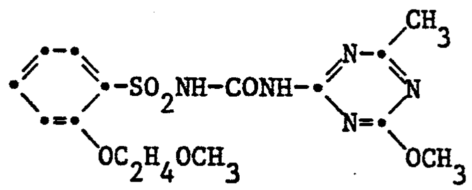 Smp. 134-138°

N-(2-Methoxyäthoxyphenylsulfonyl)-N'-(4-methoxy-6-methyl-triazin-2-yl)-harnstoff

D 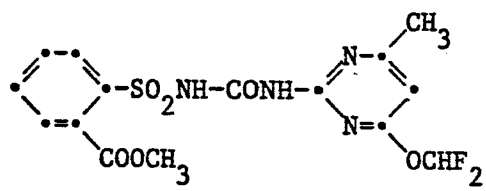 Smp. 163-164°

N-(2-Methylbenzoylsulfonyl)-N'-(4-difluormethoxy-6-methyl)-pyrimidin-2-yl)-harnstoff

E 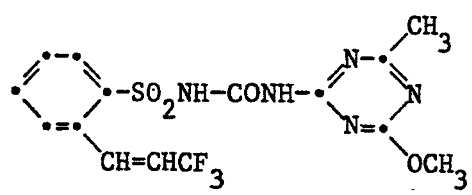 Smp. 159-160°

N-(2-γγγ-trifluoro-propyl-1-enylphenylsulfonyl)-N'-(4-methoxy-6-methyltriazin-2-yl)-harnstoff:

F 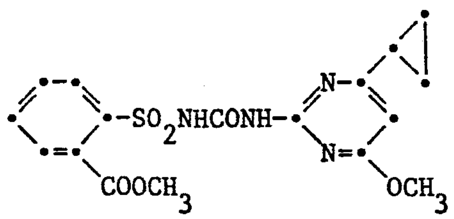 Smp. 173-175°

N-(2-methoxycarbonyl-phenylsulfonyl)-N'-(4-cyclopropyl-6-methoxy-2-yl)-harnstoff

G 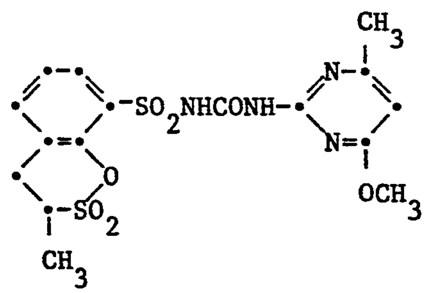 Smp. 216-218°

N-(3-Methyl-3,4-dihydro-1,2-benzoxathiin-8-yl-sulfonyl)-N'-(4-methoxy-6-methyl-pyrimidin-2-yl)-harnstoff.

Formulierungsbeispiele für Wirkstoffe der Formel II-VI oder Mischungen

a) Spritzpulver

| | a) | b) | c) |
|---|---|---|---|
| Wirkstoff der Formeln II-VI oder Mischung mit einem Herbizid der Formel I | 20 % | 60 % | 0,5 % |
| Na-Ligninsulfonat | 5 % | 5 % | 5 % |
| Na-Laurylsulfat | 3 % | - | - |
| Na-Diisobutylnaphthalinsulfonat | - | 6 % | 6 % |
| Octylphenolpolyäthylenglykoläther (7-8 Mol AeO) | - | 2 % | 2 % |
| Hochdisperse Kieselsäure | 5 % | 27 % | 27 % |
| Kaolin | 67 % | - | - |
| Natriumchlorid | - | - | 59,5 % |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

b) Emulsions-Konzentrat

| | a) | b) |
|---|---|---|
| Wirkstoff der Formeln II-VI oder Mischung mit einem Herbizid der Formel I | 10 % | 1 % |
| Octylphenolpolyäthylenglykoläther (4-5 Mol AeO) | 3 % | 3 % |
| Ca-Dodecylbenzolsulfonat | 3 % | 3 % |
| Ricinusölpolyglykoläther (36 Mol AeO) | 4 % | 4 % |
| Cyclohexanon | 30 % | 10 % |
| Xylolgemisch | 50 % | 79 % |

Aus diesem Konzentrat können durch Verdünnen mit Wasser Emulsionen jeder gewünschten Konzentration hergestellt werden.

c) Stäubemittel

| | a) | b) |
|---|---|---|
| Wirkstoff der Formeln II-VI oder Mischung mit einem Herbizid der Formel I | 0,1 % | 1 % |
| Talkum | 99,9 % | - |
| Kaolin | - | 99 % |

Man erhält anwendungsfertige Stäubemittel, indem der Wirkstoff mit dem Träger vermischt und auf einer geeigneten Mühle vermahlen wird.

d) Extruder Granulat

| | a) | b) |
|---|---|---|
| Wirkstoff der Formeln II-VI oder Mischung mit einem Herbizid der Formel I | 10 % | 1 % |
| Na-Ligninsulfonat | 2 % | 2 % |
| Carboxymethylcellulose | 1 % | 1 % |
| Kaolin | 87 % | 96 % |

Der Wirkstoff wird mit den Zusatzstoffen vermischt, vermahlen und mit Wasser angefeuchtet. Dieses Gemisch wird extrudiert und anschliessend im Luftstrom getrocknet.

e) Umhüllungs-Granulat

| | |
|---|---|
| Wirkstoff der Formeln II-VI oder Mischung mit einem Herbizid der Formel I | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

f) Suspensions-Konzentrat

| | a) | b) |
|---|---|---|
| Wirkstoff der Formeln II-VI oder Mischung mit einem Herbizid | 40 % | 5 % |
| Aethylenglykol | 10 % | 10 % |
| Nonylphenolpolyäthylenglykoläther (15 Mol AeO) | 6 % | 1 % |
| Na-Ligninsulfonat | 10 % | 5 % |
| Carboxymethylcellulose | 1 % | 1 % |
| 37%ige wässrige Formaldehyd-Lösung | 0,2 % | 0,2 % |
| Silikonöl in Form einer 75%igen wässrigen Emulsion | 0,8 % | 0,8 % |
| Wasser | 32 % | 77 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

g) Salzlösung

| | |
|---|---|
| Wirkstoff der Formeln II-VI oder Mischung mit einem Herbizid der Formel I | 5 % |
| Isopropylamin | 1 % |
| Octylphenolpolyäthylenglykoläther (78 Mol AeO) | 3 % |
| Wasser | 91 % |

Biologische Beispiele

Die Fähigkeit der Verbindungen der Formeln II-VI, Kulturpflanzen vor der phytotoxischen Wirkung starker Herbizide zu schützen, kann aus den folgenden Beispielen ersehen werden. In den Versuchbeschreibungen werden die Verbindungen der Formeln II-VI als Antidote (Gegenmittel) bezeichnet.

Beispiel 1: Saatbeizung für Antidot; Herbizid Vorauflauf in Mais

Maissamen der Sorte "LG 5" werden mit der als Antidot zu prüfenden Substanz in einen Glasbehälter gemischt. Samen und Produkt werden durch Schütteln und Rotation gut zusammengemischt. Plastiktöpfe (oberer Ø 11 cm) werden mit Erde gefüllt und die gebeizten Samen werden eingesät. Nach dem Bedecken der Samen wird das Herbizid appliziert. 21 Tage nach der Herbizidapplikation wird die Schutzwirkung des Antidot in Prozent bonitiert. Als Referenzen dienen dabei die mit Herbizid allein behandelten Pflanzen (keine Schutzwirkung) sowie die vollständig unbehandelte Kontrolle (100 % Wachstum).

Die Resultate sind unten zusammengefasst:

| Herbizid No. | Aufwandmenge | Antidote No | Aufwandmenge | relative Schutzwirkung |
|---|---|---|---|---|
| A | 125 g/ha | II | 2 g/kg Samen | 12,5% |
| A | 125 g/ha | II | 1 g/kg Samen | 12,5% |
| A | 62 g/ha | II | 2 g/kg Samen | 25% |
| A | 62 g/ha | II | 1 g/kg Samen | 25% |
| A | 62 g/ha | II | 0,5 g/kg Samen | 12,5% |
| A | 125 g/ha | III | 1 g/kg Samen | 12,5% |
| A | 125 g/ha | III | 0,5 g/kg Samen | 38% |
| A | 125 g/ha | III | 0,25 g/kg Samen | 23% |
| A | 62 g/ha | III | 0,25 g/kg Samen | 23% |
| A | 125 g/ha | V | 1 g/kg Samen | 38% |
| A | 125 g/ha | V | 0,5 g/kg Samen | 12,5% |
| A | 62 g/ha | V | 1 g/kg Samen | 50% |
| A | 52 g/ha | V | 0,5 g/kg Samen | 38% |
| A | 62 g/ha | V | 0,25 g/kg Samen | 25% |

| Herbizid No. | Herbizid Aufwandmenge | No | Antidote Aufwandmenge | relative Schutzwirkung |
|---|---|---|---|---|
| B | 125 g/ha | II | 2 g/kg Samen | 25% |
| B | 125 g/ha | II | 1 g/kg Samen | 38% |
| B | 125 g/ha | II | 0,5 g/kg Samen | 38% |
| B | 125 g/ha | IV | 1 g/kg Samen | 25% |
| B | 125 g/ha | IV | 0,5 g/kg Samen | 12,5% |
| B | 125 g/ha | IV | 0,25 g/kg Samen | 25% |
| B | 125 g/ha | V | 1 g/kg Samen | 25% |
| B | 125 g/ha | V | 0,5 g/kg Samen | 12,5% |
| B | 125 g/ha | V | 0,25 g/kg Samen | 25% |
| C | 125 g/ha | II | 0,5 g/kg Samen | 25% |
| C | 125 g/ha | II | 0,5 g/kg Samen | 38% |
| C | 125 g/ha | II | 0,25 g/kg Samen | 38% |
| C | 62 g/ha | II | 1 g/kg Samen | 50% |
| C | 62 g/ha | II | 0,5 g/kg Samen | 50% |
| C | 62 g/ha | II | 0,25 g/kg Samen | 50% |
| C | 31 g/ha | II | 1 g/kg Samen | 50% |
| C | 31 g/ha | II | 0,5 g/kg Samen | 50% |
| C | 31 g/ha | II | 0,25 g/kg Samen | 50% |
| C | 125 g/ha | III | 0,5 g/kg Samen | 25% |
| C | 125 g/ha | III | 0,25 g/kg Samen | 25% |
| C | 62 g/ha | III | 1 g/kg Samen | 25% |
| C | 62 g/ha | III | 0,5 g/kg Samen | 50% |
| C | 62 g/ha | III | 0,25 g/kg Samen | 50% |
| C | 31 g/ha | III | 0,5 g/kg Samen | 38% |
| C | 31 g/ha | III | 0,25 g/kg Samen | 38% |
| C | 125 g/ha | IV | 1 g/kg Samen | 25% |
| C | 125 g/ha | IV | 0,5 g/kg Samen | 25% |
| C | 125 g/ha | IV | 0,25 g/kg Samen | 25% |
| C | 62 g/ha | IV | 1 g/kg Samen | 50% |

| Herbizid No. | Aufwandmenge | Antidote No | Aufwandmenge | relative Schutzwirkung |
|---|---|---|---|---|
| C | 62 g/ha | IV | 0,5 g/kg Samen | 50% |
| C | 62 g/ha | IV | 0,25 g/kg Samen | 50% |
| C | 31 g/ha | IV | 1 g/kg Samen | 50% |
| C | 31 g/ha | IV | 0,5 g/kg Samen | 50% |
| C | 31 g/ha | IV | 0,25 g/kg Samen | 50% |
| C | 125 g/ha | V | 1 g/kg Samen | 25% |
| C | 125 g/ha | V | 0,5 g/kg Samen | 38% |
| C | 125 g/ha | V | 0,25 g/kg Samen | 25% |
| C | 62 g/ha | V | 1 g/kg Samen | 50% |
| C | 62 g/ha | V | 0,5 g/kg Samen | 38% |
| C | 62 g/ha | V | 0,25 g/kg Samen | 12,5% |
| C | 31 g/ha | V | 1 g/kg Samen | 50% |
| C | 31 g/ha | V | 0,25 g/kg Samen | 38% |
| E | 125 g/ha | II | 0,5 g/kg Samen | 12,5% |
| E | 125 g/ha | II | 0,25 g/kg Samen | 25% |
| E | 62 g/ha | II | 0,5 g/kg Samen | 12,5% |
| E | 62 g/ha | II | 0,25 g/kg Samen | 12,5% |

Beispiel 2: Saatbeizung für Antidot; Herbizid Nachauflauf in Mais

Maissamen der Sorte "LG 5" werden mit der als Antidot zu prüfenden Substanz in einen Glasbehälter gemischt. Samen und Produkt werden durch Schütteln und Rotation gut zusammengemischt. Plastiktöpfe (oberer Ø 11 cm) werden mit Erde gefüllt und die gebeizten Samen werden eingesät. Nach ca. 3 Wochen, wenn die Planzen das Dreiblattstadium erreicht haben, wird das Herbizid appliziert. 14 Tage nach der Herbizidapplikation wird die Schutzwirkung des Antidot in Prozent bonitiert. Als Referenzen dienen dabei die mit Herbizid allein behandelten Pflanzen (keine Schutzwirkung), sowie die vollständig unbehandelte Kontrolle (100 % Wachstum). Die Resultate sind auf den folgenden Seiten zusammengefasst:

| Herbizid No. | Aufwandmenge | No | Antidote Aufwandmenge | relative Schutzwirkung |
|---|---|---|---|---|
| A | 125 g/ha | II | 2 g/kg Samen | 63% |
| A | 125 g/ha | II | 1 g/kg Samen | 50% |
| A | 125 g/ha | II | 0,5 g/kg Samen | 12,5% |
| A | 62 g/ha | II | 2 g/kg Samen | 50% |
| A | 62 g/ha | II | 1 g/kg Samen | 50% |
| A | 62 g/ha | II | 0,5 g/kg Samen | 38% |
| A | 125 g/ha | III | 1 g/kg Samen | 12,5% |
| A | 125 g/ha | III | 0,5 g/kg Samen | 38% |
| A | 125 g/ha | III | 0,25 g/kg Samen | 12,5% |
| A | 62 g/ha | III | 1 g/kg Samen | 38% |
| A | 62 g/ha | III | 0,5 g/kg Samen | 63% |
| A | 62 g/ha | III | 0,25 g/kg Samen | 12,5% |
| A | 125 g/ha | IV | 1 g/kg Samen | 50% |
| A | 125 g/ha | IV | 0,5 g/kg Samen | 38% |
| A | 125 g/ha | IV | 0,25 g/kg Samen | 25% |
| A | 62 g/ha | IV | 1 g/kg Samen | 50% |
| A | 62 g/ha | IV | 0,5 g/kg Samen | 38% |
| A | 62 g/ha | IV | 0,25 g/kg Samen | 38% |
| A | 125 g/ha | V | 1 g/kg Samen | 50% |
| A | 125 g/ha | V | 0,5 g/kg Samen | 38% |
| A | 125 g/ha | V | 0,25 g/kg Samen | 38% |
| A | 62 g/ha | V | 1 g/kg Samen | 50% |
| A | 62 g/ha | V | 0,5 g/kg Samen | 38% |
| A | 62 g/ha | V | 0,25 g/kg Samen | 38% |
| | | | | |
| B | 125 g/ha | II | 2 g/kg Samen | 63% |
| B | 125 g/ha | II | 1 g/kg Samen | 50% |
| B | 125 g/ha | II | 0,5 g/kg Samen | 38% |
| B | 62 g/ha | II | 2 g/kg Samen | 50% |

| Herbizid No. | Aufwandmenge | Antidote No | Aufwandmenge | relative Schutzwirkung |
|---|---|---|---|---|
| B | 62 g/ha | II | 1 g/kg Samen | 38% |
| B | 62 g/ha | II | 0,5 g/kg Samen | 38% |
| B | 125 g/ha | III | 1 g/kg Samen | 25% |
| B | 125 g/ha | III | 0,5 g/kg Samen | 38% |
| B | 125 g/ha | III | 0,25 g/kg Samen | 38% |
| B | 62 g/ha | III | 1 g/kg Samen | 25% |
| B | 62 g/ha | III | 0,5 g/kg Samen | 38% |
| B | 62 g/ha | III | 0,25 g/kg Samen | 38% |
| B | 125 g/ha | IV | 1 g/kg Samen | 50% |
| B | 125 g/ha | IV | 0,5 g/kg Samen | 38% |
| B | 125 g/ha | IV | 0,25 g/kg Samen | 25% |
| B | 62 g/ha | IV | 1 g/kg Samen | 38% |
| B | 62 g/ha | IV | o,5 g/kg Samen | 38% |
| B | 62 g/ha | IV | 0,25 g/kg Samen | 38% |
| B | 125 g/ha | V | 1 g/kg Samen | 50% |
| B | 125 g/ha | V | 0,5 g/kg Samen | 38% |
| B | 125 g/ha | V | 0,25 g/kg Samen | 38% |
| B | 62 g/ha | V | 1 g/kg Samen | 50% |
| B | 62 g/ha | V | 0,5 g/kg Samen | 38% |
| B | 62 g/ha | V | 0,25 g/kg Samen | 38% |
| C | 125 g/ha | II | 1 g/kg Samen | 25% |
| C | 125 g/ha | II | 0,5 g/kg Samen | 50% |
| C | 125 g/ha | II | 0,25 g/kg Samen | 25% |
| C | 62 g/ha | II | 1 g/kg Samen | 38% |
| C | 62 g/ha | II | 0,5 g/kg Samen | 50% |
| C | 62 g/ha | II | 0,25 g/kg Samen | 38% |
| C | 125 g/ha | III | 1 g/kg Samen | 12,5% |
| C | 125 g/ha | III | 0,5 g/kg Samen | 25% |
| C | 62 g/ha | III | 1 g/kg Samen | 12,5% |
| C | 62 g/ha | III | 0,5 g/kg Samen | 12,5% |

| Herbizid No. | Aufwandmenge | Antidote No | Aufwandmenge | relative Schutzwikrung |
|---|---|---|---|---|
| C | 125 g/ha | IV | 0,25 g/kg Samen | 12,5% |
| C | 62 g/ha | IV | 0,5 g/kg Samen | 25% |
| C | 62 g/ha | IV | 0,25 g/kg Samen | 12,5% |
| C | 31 g/ha | IV | 1 g/kg Samen | 25% |
| C | 31 g/ha | IV | 0,5 g/kg Samen | 12,5% |
| C | 125 g/ha | V | 1 g/kg Samen | 63% |
| C | 125 g/ha | V | 0,5 g/kg Samen | 50% |
| C | 125 g/ha | V | 0,25 g/kg Samen | 50% |
| C | 62 g/ha | V | 1 g/kg Samen | 63% |
| C | 62 g/ha | V | 0,5 g/kg Samen | 50% |
| C | 62 g/ha | V | 0,25 g/kg Samen | 50% |
| C | 31 g/ha | V | 1 g/kg Samen | 25% |
| C | 31 g/ha | V | 0,5 g/kg Samen | 12,5% |
| C | 31 g/ha | V | 0,25 g/kg Samen | 12,5% |
| D | 125 g/ha | II | 1 g/kg Samen | 25% |
| D | 125 g/ha | II | 0,5 g/kg Samen | 12,5% |
| D | 125 g/ha | II | 0,25 g/kg Samen | 25% |
| D | 62 g/ha | II | 1 g/kg Samen | 38% |
| D | 62 g/ha | II | 0,5 g/kg Samen | 50% |
| D | 62 g/ha | II | 0,25 g/kg Samen | 50% |
| D | 31 g/ha | II | 1 g/kg Samen | 25% |
| D | 31 g/ha | II | 0,5 g/kg Samen | 38% |
| D | 31 g/ha | II | 0,25 g/kg Samen | 38% |
| D | 15 g/ha | II | 1 g/kg Samen | 25% |
| D | 15 g/ha | II | 0,5 g/kg Samen | 25% |
| D | 15 g/ha | II | 0,25 g/kg Samen | 25% |
| D | 125 g/ha | III | 1 g/kg Samen | 12,5% |

| Herbizid No. | Aufwandmenge | Antidote No | Aufwandmenge | relative Schutzwirkung |
|---|---|---|---|---|
| D | 125 g/ha | III | 0,25 g/kg Samen | 12,5% |
| D | 62 g/ha | III | 1 g/kg Samen | 25% |
| D | 62 g/ha | III | 0,5 g/kg Samen | 25% |
| D | 62 g/ha | III | 0,25 g/kg Samen | 25% |
| D | 31 g/ha | III | 1 g/kg Samen | 12,5% |
| D | 31 g/ha | III | 0,5 g/kg Samen | 12,5% |
| D | 31 g/ha | III | 0,25 g/kg Samen | 12,5% |
| D | 125 g/ha | IV | 1 g/kg Samen | 63% |
| D | 125 g/ha | IV | 0,5 g/kg Samen | 50% |
| D | 125 g/ha | IV | 0,25 g/kg Samen | 38% |
| D | 62 g/ha | IV | 1 g/kg Samen | 63% |
| D | 62 g/ha | IV | 0,5 g/kg Samen | 50% |
| D | 62 g/ha | IV | 0,25 g/kg Samen | 63% |
| D | 31 g/ha | IV | 1 g/kg Samen | 50% |
| D | 31 g/ha | IV | 0,5 g/kg Samen | 38% |
| D | 31 g/ha | IV | 0,25 g/kg Samen | 38% |
| D | 15 g/ha | IV | 1 g/kg Samen | 25% |
| D | 15 g/ha | IV | 0,5 g/kg Samen | 25% |
| D | 15 g/ha | IV | 0,25 g/kg Samen | 12,5% |
| D | 125 g/ha | V | 1 g/kg Samen | 25% |
| D | 125 g/ha | V | 0,5 g/kg Samen | 12,5% |
| D | 62 g/ha | V | 1 g/kg Samen | 38% |
| D | 62 g/ha | V | 0,5 g/kg Samen | 25% |
| D | 62 g/ha | V | 0,25 g/kg Samen | 25% |
| D | 31 g/ha | V | 1 g/kg Samen | 12,5% |
| D | 31 g/ha | V | 0,5 g/kg Samen | 12,5% |
| D | 31 g/ha | V | 0,25 g/kg Samen | 12,5% |

Beispiel 3: Tankmischung Vorauflauf in Mais

Maissamen der Sorte "LG 5" werden in Plastiktöpfe (oberer Ø 11 cm), die 0,5 l Erde enthalten, im Gewächshaus ausgesät. Nach dem Bedecken der Samen wird die als Safener zu prüfende Substanz zusammen mit dem Herbizid als Tankmischung auf die Bodenoberfläche appliziert. 21 Tage nach der Applikation wird die Schutzwirkung des Safeners in Prozent bonitiert. Als Referenz dienen dabei die mit Herbizid allein behandelten Pflanzen (keine Schutzwirkung) sowie die vollständig unbehandelte Kontrolle (100 % Wachstum). Die Resultate sind unten zusammengefasst.

| Herbizid No. | Aufwandmenge | Antidote No | Aufwandmenge | relative Schutzwirkung |
|---|---|---|---|---|
| C | 31 g/ha | II | 31 g/ha | 12,5% |
| C | 15 g/ha | II | 15 g/ha | 25% |
| C | 7 g/ha | II | 7 g/ha | 38% |
| C | 15 g/ha | III | 15 g/ha | 25% |
| C | 7 g/ha | III | 7 g/ha | 25% |
| C | 31 g/ha | V | 31 g/ha | 12,5% |
| C | 15 g/ha | V | 15 g/ha | 25% |
| C | 7 g/ha | V | 7 g/ha | 38% |
| E | 125 g/ha | II | 125 g/ha | 25% |
| E | 62 g/ha | II | 62 g/ha | 12,5% |
| E | 125 g/ha | III | 125 g/ha | 25% |
| E | 62 g/ha | III | 62 g/ha | 12,5% |
| E | 31 g/ha | III | 31 g/ha | 25% |
| E | 15 g/ha | III | 15 g/ha | 25% |

Beispiel 4: Saatbeizung für Antidot; Herbizid Vorauflauf in Sorghum

Sorghumsamen werden mit der als Antidot zu prüfenden Substanz in einen Glasbehälter gemischt. Samen und Produkt werden durch Schütteln und Rotation gut zusammengemischt. Plastiktöpfe (oberer Ø 11 cm) werden mit Erde gefüllt und die gebeizten Samen werden eingesät. Nach dem Bedecken der Samen wird das Herbizid im Vorauflauf appliziert. 14 Tage nach der Herbizidapplikation wird die Schutzwirkung des Antidot in Prozent bonitiert. Als Referenzen dienen dabei die mit Herbizid allein behandelten Pflanzen (keine Schutzwirkung) sowie die vollständig unbehandelte Kontrolle (100 % Wachstum). Die Resultate sind unten zusammengefasst:

| Herbizid No | Aufwandmenge | Antidote No | Aufwandmenge | relative Schutzwirkung |
|---|---|---|---|---|
| A | 125 g/ha | II | 1 g/kg Samen | 12,5% |
| A | 125 g/ha | II | 0,5 g/kg Samen | 12,5% |
| A | 62 g/ha | II | 1 g/kg Samen | 25% |
| A | 62 g/ha | II | 0,5 g/kg Samen | 12,5% |
| A | 62 g/ha | II | 0,25 g/kg Samen | 12,5% |
| A | 31 g/ha | II | 1 g/kg Samen | 38% |
| A | 31 g/ha | II | 0,5 g/kg Samen | 50% |
| A | 31 g/ha | II | 0,25 g/kg Samen | 38% |
| A | 15 g/ha | II | 1 g/kg Samen | 50% |
| A | 15 g/ha | II | 0,5 g/kg Samen | 63% |
| A | 15 g/ha | II | 0,25 g/kg Samen | 63% |
| A | 15 g/ha | IV | 1 g/kg Samen | 25% |
| A | 15 g/ha | IV | 0,5 g/kg Samen | 25% |
| A | 15 g/ha | IV | 0,25 g/kg Samen | 25% |

| Herbizid No. | Herbizid Aufwandmenge | Antidote No | Antidote Aufwandmenge | relative Schutzwirkung |
|---|---|---|---|---|
| A | 15 g/ha | V | 0,5 g/kg Samen | 12,5% |
| B | 125 g/ha | II | 1 g/kg Samen | 50% |
| B | 125 g/ha | II | 0,5 g/kg Samen | 50% |
| B | 125 g/ha | II | 0,25 g/kg Samen | 50% |
| B | 63 g/ha | II | 1 g/kg Samen | 63% |
| B | 63 g/ha | II | 0,5 g/kg Samen | 63% |
| B | 63 g/ha | II | 0,25 g/kg Samen | 50% |
| B | 31 g/ha | II | 1 g/kg Samen | 38% |
| B | 31 g/ha | II | 0,5 g/kg Samen | 50% |
| B | 31 g/ha | II | 0,25 g/kgg Samen | 38% |
| B | 125 g/ha | IV | 1 g/kg Samen | 25% |
| B | 125 g/ha | IV | 0,5 g/kg Samen | 38% |
| B | 125 g/ha | IV | 0,25 g/kg Samen | 38% |
| B | 62 g/ha | IV | 1 g/kg Samen | 12,5% |
| B | 62 g/ha | IV | 0,5 g/kg Samen | 38% |
| B | 62 g/ha | IV | 0,25 g/kg Samen | 50% |
| B | 31 g/ha | IV | 1 g/kg Samen | 25% |
| B | 31 g/ha | IV | 0,5 g/kg Samen | 25% |
| B | 31 g/ha | IV | 0,25 g/kg Samen | 25% |
| B | 125 g/ha | V | 1 g/kg Samen | 50% |
| B | 125 g/ha | V | 0,5 g/kg Samen | 38% |
| B | 125 g/ha | V | 0,25 g/kg Samen | 38% |
| B | 62 g/ha | V | 1 g/kg Samen | 38% |
| B | 62 g/ha | V | 0,5 g/kg Samen | 38% |
| B | 62 g/ha | V | 0,25 g/kg Samen | 25% |
| B | 31 g/ha | V | 1 g/kg Samen | 25% |
| B | 31 g/ha | V | 0,5 g/kg Samen | 25% |
| B | 31 g/ha | V | 0,25 g/kg Samen | 12,5% |

| Herbizid No. | Aufwandmenge | No | Antidote Aufwandmenge | relative Schutzwirkung |
|---|---|---|---|---|
| C | 125 g/ha | II | 1 g/kg Samen | 12,5% |
| C | 125 g/ha | II | 0,5 g/kg Samen | 12,5% |
| C | 125 g/ha | II | 0,25 g/kg Samen | 12,5% |
| C | 62 g/ha | II | 1 g/kg Samen | 25% |
| C | 62 g/ha | II | 0,5 g/kg Samen | 25% |
| C | 31 g/ha | II | 1 g/kg Samen | 38% |
| C | 31 g/ha | II | 0,5 g/kg Samen | 38% |
| C | 31 g/ha | II | 0,25 g/kg Samen | 38% |
| C | 15 g/ha | II | 1 g/kg Samen | 50% |
| C | 15 g/ha | II | 0,5 g/kg Samen | 50% |
| C | 15 g/ha | II | 0,25 g/kg Samen | 50% |
| C | 31 g/ha | IV | 1 g/kg Samen | 12,5% |
| C | 31 g/ha | IV | 0,5 g/kg Samen | 25% |
| C | 31 g/ha | IV | 0,25 g/kg Samen | 25% |
| C | 15 g/ha | IV | 1 g/kg Samen | 38% |
| C | 15 g/ha | IV | 0,5 g/kg Samen | 50% |
| C | 15 g/ha | IV | 0,25 g/kg Samen | 38% |
| C | 31 g/ha | V | 1 g/kg Samen | 25% |
| C | 31 g/ha | V | 0,5 g/kg Samen | 12,5% |
| C | 15 g/ha | V | 1 g/kg Samen | 25% |
| C | 15 g/ha | V | 0,5 g/kg Samen | 25% |
| C | 15 g/ha | V | 0,25 g/kg Samen | 12,5% |
| D | 31 g/ha | IV | 1 g/kg Samen | 25% |
| D | 31 g/ha | IV | 0,5 g/kg Samen | 25% |
| D | 31 g/ha | IV | 0,25 g/kg Samen | 12,5% |
| D | 15 g/ha | IV | 1 g/kg Samen | 38% |
| D | 15 g/ha | IV | 0,5 g/kg Samen | 38% |
| D | 15 g/ha | IV | 0,25 g/kg Samen | 25% |

| Herbizid No. | Aufwandmenge | No | Antidote Aufwandmenge | relative Schutzwirkung |
|---|---|---|---|---|
| E | 31 g/ha | V | 1 g/kg Samen | 25% |
| E | 31 g/ha | V | 0,5 g/kg Samen | 25% |
| E | 31 g/ha | V | 0,25 g/kg Samen | 12,5% |
| E | 15 g/ha | V | 1 g/kg Samen | 12,5% |
| E | 15 g/ha | V | 0,5 g/kg Samen | 12,5% |
| E | 15 g/ha | V | 0,25 g/kg Samen | 12,5% |

Beispiel 5: Saatbeizung für Antidot, Herbizid Nachauflauf in Sorghum

Sorghumsamen der Sorte G 623 werden mit der als Safener zu prüfenden Substanz in einen Glasbehälter gemischt. Samen und Produkt werden durch Schütteln und Rotation gut zusammengemischt. Plastiktöpfe (oberer Ø 11 cm) werden mit Erde gefüllt und die gebeizten Samen werden eingesät. Nach dem Bedecken der Samen wird das Herbizid im Nachauflauf appliziert. 18 Tage nach der Herbizidapplikation wird die Schutzwirkung des Safeners in Prozent bonitiert. Als Referenz dienen dabei die mit Herbizid allein behandelten Pflanzen (keine Schutzwirkung) sowie die vollständig unbehandelte Kontrolle (100 % Wachstum).

Die Resultate sind unten zusammengefasst:

| Herbizid No. | Aufwandmenge | No | Antidote Aufwandmenge | relative Schutzwirkung |
|---|---|---|---|---|
| B | 125 g/ha | II | 1 g/kg Samen | 25% |
| B | 125 g/ha | II | 0,5 g/kg Samen | 25% |
| B | 125 g/ha | II | 0,25 g/kg Samen | 12,5% |
| B | 62 g/ha | II | 1 g/kg Samen | 25% |

| Herbizid No. | Aufwandmenge | No | Antidote Aufwandmenge | relative Schutzwirkung |
|---|---|---|---|---|
| B | 62 g/ha | II | 0,5 g/kg Samen | 25% |
| B | 62 g/ha | II | 0,25 g/kg Samen | 12,5% |
| B | 31 g/ha | II | 1 g/kg Samen | 25% |
| B | 31 g/ha | II | 0,5 g/kg Samen | 25% |
| B | 31 g/ha | II | 0,25 g/kg Samen | 12,5% |
| B | 125 g/ha | IV | 1 g/kg Samen | 25% |
| B | 125 g/ha | IV | 0,5 g/kg Samen | 25% |
| B | 125 g/ha | IV | 0,25 g/kg Samen | 25% |
| B | 62 g/ha | IV | 1 g/kg Samen | 25% |
| B | 62 g/kg | IV | 0,5 g/kg Samen | 25% |
| B | 62 g/ha | IV | 0,25 g/kg Samen | 25% |
| B | 31 g/ha | IV | 1 g/kg Samen | 25% |
| B | 31 g/ha | IV | 0,5 g/kg Samen | 25% |
| B | 31 g/ha | IV | 0,25 g/kg Samen | 25% |
| B | 31 g/ha | V | 1 g/kg Samen | 12,5% |
| B | 31 g/ha | V | 0,5 g/kg Samen | 12,5% |
| B | 15 g/ha | V | 1 g/kg Samen | 25% |
| B | 15 g/ha | V | 0,5 g/kg Samen | 25% |
| B | 15 g/ha | V | 0,25 g/kg Samen | 25% |
| C | 125 g/ha | II | 1 g/kg Samen | 25% |
| C | 125 g/ha | II | 0,5 g/kg Samen | 12,5% |
| C | 62 g/ha | II | 1 g/kg Samen | 25% |
| C | 62 g/ha | II | 0,5 g/kg Samen | 12,5% |
| C | 62 g/ha | II | 0,25 g/kg Samen | 12,5% |
| C | 31 g/kg | II | 1 g/kg Samen | 38% |
| C | 31 g/ha | II | 0,5 g/kg Samen | 38% |
| C | 31 g/ha | II | 0,25 g/kg Samen | 25% |
| C | 15 g/ha | II | 1 g/kg Samen | 38% |
| C | 15 g/ha | II | 0,5 g/kg Samen | 38% |

| Herbizid No. | Aufwandmenge | No | Antidote Aufwandmenge | relative Schutzwirkung |
|---|---|---|---|---|
| C | 15 g/ha | II | 0,25 g/kg Samen | 25% |
| C | 31 g/ha | IV | 1 g/kg Samen | 12,5% |
| C | 31 g/ha | IV | 0,5 g/kg Samen | 25% |
| C | 31 g/ha | IV | 0,25 g/kg Samen | 25% |
| C | 15 g/ha | IV | 1 g/kg Samen | 25% |
| C | 15 g/ha | IV | 0,5 g/kg Samen | 25% |
| C | 15 g/ha | IV | 0,25 g/kg Samen | 25% |
| C | 62 g/ha | V | 1 g/kg Samen | 12,5% |
| C | 62 g/ha | V | 0,5 g/kg Samen | 12,5% |
| C | 62 g/ha | V | 0,25 g/kg Samen | 12,5% |
| C | 31 g/ha | V | 1 g/kg Samen | 25% |
| C | 31 g/ha | V | 0,5 g/kg Samen | 25% |
| C | 31 g/ha | V | 0,25 g/kg Samen | 12,5% |
| C | 15 g/ha | V | 1 g/kg Samen | 25% |
| C | 15 g/ha | V | 0,5 g/kg Samen | 25% |
| C | 15 g/ha | V | 0,25 g/kg Samen | 25% |
| D | 62 g/ha | IV | 1 g/kg Samen | 38% |
| D | 62 g/ha | IV | 0,5 g/kg Samen | 38% |
| D | 62 g/ha | IV | 0,25 g/kg Samen | 38% |
| D | 31 g/ha | IV | 1 g/kg Samen | 38% |
| D | 31 g/ha | IV | 0,5 g/kg Samen | 38% |
| D | 31 g/ha | IV | 0,25 g/kg Samen | 38% |
| D | 15 g/ha | IV | 1 g/kg Samen | 25% |
| D | 15 g/ha | IV | 0,5 g/kg Samen | 25% |
| D | 15 g/ha | IV | 0,25 g/kg Samen | 25% |

Beispiel 6: Tankmischung Vorauflauf in Sorghum

Plastikcontainer (25 cm lang x 17 cm breit x 12 cm hoch) werden mit sandiger Lehmerde gefüllt und Sorghumsamen der Sorte Funk FG 522 eingesät. Nach dem Bedecken der Samen wird die als Safener zu prüfende Substanz zusammen mit dem Herbizid in verdünnter Lösung als Tankmischung auf die Bodenoberfläche gesprüht. 30 Tage nach der Applikation wird die Schutzwirkung des Safeners in Prozent bonitiert. Als Referenz dienen dabei die mit Herbizid allein behandelten Pflanzen (keine Schutzwirkung) sowie die vollständig unbehandelte Kontrolle (100% Wachstum). Die Resultate sind unten zusammengefasst.

| Herbizid No. | Aufwandmenge | Antidote No | Aufwandmenge | relative Schutzwirkung |
|---|---|---|---|---|
| E | 125 g/ha | IV | 125 g/ha | 38% |
| E | 62 g/ha | IV | 62 g/ha | 25% |

Beispiel 7: Tankmischung Vorauflauf in Gerste

Gerstensamen werden in Plastiktöpfe (oberer Ø 11 cm), die 0,5 l Erde enthalten, im Gewächshaus ausgesät. Nach dem Bedecken der Samen wird die als Antidot zu prüfende Substanz zusammen mit dem Herbizid als Tankmischung auf die Bodenoberfläche appliziert. 21 Tage nach der Applikation wird die Schutzwirkung des Antidots in Prozent bonitiert. Als Referenzen dienen dabei die mit Herbizid allein behandelten Pflanzen (keine Schutzwirkung) sowie die vollständig unbehandelte Kontrolle (100 % Wachstum).

Die Resultate sind unten zusammengefasst:

| Herbizid No. | Aufwandmenge | Antidote No | Aufwandmenge | relative Schutzwirkung |
|---|---|---|---|---|
| A | 125 g/ha | II | 125 g/ha | 63% |
| A | 62 g/ha | II | 62 g/ha | 25% |
| A | 125 g/ha | III | 125 g/ha | 50% |
| A | 62 g/ha | III | 62 g/ha | 25% |
| A | 31 g/ha | III | 31 g/ha | 12,5% |
| A | 125 g/ha | V | 125 g/ha | 63% |
| A | 62 g/ha | V | 62 g/ha | 38% |
| A | 31 g/ha | V | 31 g/ha | 12,5% |
| C | 125 g/ha | II | 125 g/ha | 25% |
| C | 62 g/ha | II | 62 g/ha | 25% |
| C | 125 g/hal | III | 125 g/ha | 25% |
| C | 62 g/ha | III | 62 g/ha | 25% |
| E | 125 g/hal | II | 125 g/ha | 12,5% |
| E | 62 g/ha | II | 62 g/ha | 25% |
| E | 31 g/ha | II | 31 g/ha | 12,5% |

Beispiel 8: Tankmischung Vorauflauf in Soja

Plastiktöpfe (oberer Ø 6 cm) werden mit sandiger Lehmerde gefüllt und Sojasamen der Sorte "Hark" werden eingesät. Nach dem Bedecken der Samen wird die als Antidote zu prüfende Substanz zusammen mit dem Herbizid in verdünnte Lösung als Tankmischung auf die Bodenoberfläche versprüht. 21 Tage nach der Herbizidapplikation wird die Schutzwirkung des Antidots in Prozent bonitiert. Als Referenzen dienen dabei die mit Herbizid allein behandelten Pflanzen (keine Schutzwirkung) sowie die vollständig unbehandelte Kontrolle (100% Wachstum). Die Resultate sind unten zusammengefasst.

| Herbizid No. | Aufwandmenge | Antidote No | Aufwandmenge | relative Schutzwirkung |
|---|---|---|---|---|
| D | 125 g/ha | IV | 125 g/ha | 25% |
| D | 62 g/ha | IV | 62 g/ha | 12,5% |
| D | 31 g/ha | IV | 31 g/ha | 50% |

Patentansprüche

1. Herbizides Mittel, das als herbiziden Wirkstoff einen Sulfonylharnstoff der Formel I

$$Q-SO_2-NH-CO-NH-T \qquad (I)$$

worin Q ein substituierter Phenylrest der Formel

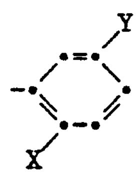

ist, worin X $C_1$-$C_3$ Halogenalkyl, $C_1$-$C_3$ Alkoxycarbonyl, $C_3$-$C_4$-Alkenyloxy, $C_1$-$C_3$ Halogenalkoxy, $C_1$-$C_3$ Alkoxy-$C_1$-$C_2$-alkoxy, Nitro, Y Wasserstoff oder Halogen bedeutet, oder Q den 3-Methyl-3,4-dihydro-1,2-benzoxathiin-8-yl-rest darstellt und T ein substituierter sechsgliedriger heterocyclischer Rest der Formel

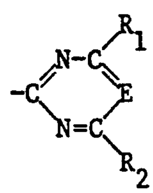

ist, worin E -CH= oder -N=, $R_1$ $C_1$-$C_3$ Alkyl, $C_1$-$C_3$ Alkoxy, $C_1$-$C_3$-Halogenalkoxy oder Cyclopropyl, $R_2$ $C_1$-$C_3$ Alkyl, $C_1$-$C_3$ Alkoxy, $C_1$-$C_3$ Halogenalkoxy oder Cyclopropyl bedeutet, wobei $R_1$ und $R_2$ nicht gleichzeitig Methyl sein können, wenn X Methoxycarbonyl und Y Wasserstoff bedeuten, dadurch gekennzeichnet, dass es als Antidote entweder Cyanomethoximino-benzacetonitril der Formel II

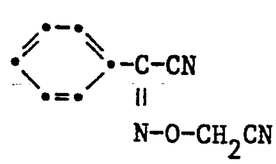

(II),

N,N-Diallyl-dichloracetamid der Formel III

$$(CH_2{=}CH{-}CH_2)_2N{-}COCHCl_2 \qquad (III),$$

2-Chlor-5-benzyloxy-Carbonyl-3-trifluormethylthiazol der Formel IV

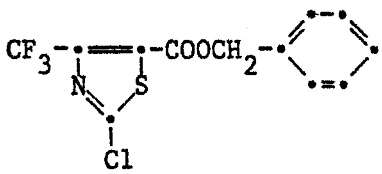

(IV),

1,8-Naphthalindicarbonsäureanhydrid der Formel V

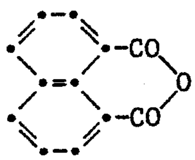

(V)

3-N-Dichloracetyl-2,2-dimethyl-1,3-oxazolidin der Formel VI

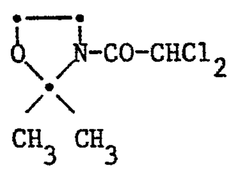

(VI)

enthält.

2. Herbizides Mittel gemäss Anspruch 1, dadurch gekennzeichnet, dass das Mengenverhältnis vom Antidot zum herbiziden Wirkstoff zwischen 1:10 und 10:1 liegt.

3. Herbizides Mittel gemäss Anspruch 1, dadurch gekennzeichnet, dass das Mengenverhältnis vom Antidot zum herbiziden Wirkstoff zwischen 1:3 und 3:1 liegt.

4. Herbizides Mittel gemäss Anspruch 1, worin in der Formel I Y für Wasserstoff steht, dadurch gekennzeichnet, dass es als Antidot eine Verbindung der Formeln II bis VI enthält.

5. Herbizides Mittel gemäss Anspruch 1, das als herbiziden Wirkstoff einen Sulfonylharnstoff, ausgewählt aus der Gruppe N-[2-(2'-Chloräthoxy)-phenyl-sulfonyl]-N'-(4-methyl-6-methoxy-triazin-2-yl)-harnstoff, N-[2-(2'-Methoxyäthoxy)-phenyl-sulfonyl]-N'-(4-methyl-6-methoxy-triazin-2-yl)-harnstoff, N-[2-(2-Butenyl-oxy)-phenyl-sulfonyl]-N'-(4-methyl-6-methoxy-triazin-2-yl)-harnstoff, N-[2-(3-Trifluorpropen-1-yl)-phenyl-sulfonyl]-N'-(4-methyl-6-methoxy-triazin-2-yl)-harnstoff, N-(2-Methoxycarbonyl-phenyl-sulfonyl)-N'-(4-methyl-6-difluormethoxy-pyrimidin-2-yl)-harnstoff, N-(2-Pentafluoräthoxyphenyl-sulfonyl)-N'-(4,6-dimethoxy-triazin-2-yl)-harnstoff, N-(2-Allyl)-oxy-phenyl-sulfonyl)-N'-(4-methyl-6-äthoxy-triazin-2-yl)-harnstoff, N-(2-Nitrophenyl-sulfonyl)-N'-(4-methyl-6-difluormethoxy-pyrimidin-2-yl)-harnstoff und N-(2-Methoxycarbonyl-phenyl-sulfonyl)-N'-(4-methyl-6-cyclopropyl-pyrimidin-2-yl)-harnstoff und N-(3-Methyl-3,4-dihydro-1,2-benzoxathiin-8-yl-sulfonyl)-N'-(4-methoxy-6-methyl-pyrimidin-2-yl)-harnstoff enthält, dadurch gekennzeichnet, dass es als Antidot eine Verbindung der Formeln II bis VI gemäss Anspruch 1 enthält.

6. Herbizides Mittel gemäss Anspruch 1, dadurch gekennzeichnet, dass es als herbiziden Wirkstoff N-(2-Chloräthoxy-phenylsulfonyl)-N'-(4-methoxy-6-methyl-1,3,5-triazin-2-yl)-harnstoff und als Antidote eine Verbindung der Formeln II bis VI enthält.

7. Herbizides Mittel gemäss Anspruch 1, dadurch gekennzeichnet, dass es als herbiziden Wirkstoff N-(2-Allyloxyphenyl)-sulfonyl)-N'-(4-äthoxy-6-methyl-1,3,5-triazin-2-yl)-harnstoff und als Antidote eine Verbindung der Formeln II bis VI enthält.

8. Herbizides Mittel gemäss Anspruch 1, dadurch gekennzeichnet, dass es als herbiziden Wirkstoff N-(2-Methoxyäthoxy-phenylsulfonyl)-N'-(4-methoxy-6-methyl-1,3,5-triazin-2-yl)-harnstoff und als Antidote eine Verbindung der Formeln II bis VI enthält.

9. Herbizides Mittel gemäss Anspruch 1, dadurch gekennzeichnet, dass es als herbiziden Wirkstoff N-(2-Methoxycarbonyl-phenylsulfonyl)-N'-(4-methoxy-6-methyl-pyrimidin-2-yl)-harnstoff und als Antidote eine Verbindung der Formeln II bis VI enthält.

10. Herbizides Mittel gemäss Ansprüchen 1 und 2, dadurch gekennzeichnet, dass es als herbiziden Wirkstoff N-[2-(3,3,3-Trifluor-prop-1-en-1-yl)-phenylsulfonyl]-N'-(4-methoxy-6-methyl-1,3,5-triazin-2-yl)-harnstoff und als Antidote eine Verbindung der Formeln II bis VI enthält.

11. Herbizides Mittel gemäss Anspruch 1, dadurch gekennzeichnet, dass es neben einem herbizid wirkenden Sulfonylharnstoff der Formel I als Antidote Cyanomethoximino-benzacetonitril der Formel II enthält.

12. Herbizides Mittel gemäss Anspruch 1, dadurch gekennzeichnet, dass es neben einem herbizid wirkenden Sulfonylharnstoff der Formel I als Antidote N,N-Diallyl-dichloracetamid der Formel III enthält.

13. Herbizides Mittel gemäss Anspruch 1, dadurch gekennzeichnet, dass es neben einem herbizid wirkenden Sulfonylharnstoff der Formel I als Antidote 2-Chlor-5-benzyloxycarbonyl-3-trifluormethylthiazol der Formel IV enthält.

14. Herbizides Mittel gemäss Anspruch 1, dadurch gekennzeichnet, dass es neben einem herbizid wirkenden Sulfonylharnstoff der Formel I als Antidote 1,8-Naphthalindicarbonsäureanhydrid der Formel V enthält.

15. Verfahren zum Schützen von Pflanzenkulturen vor Schädigung durch Sulfonylharnstoffe, dadurch gekennzeichnet, dass man die Anwendung eines Sulfonylharnstoffs der Formel I gemäss Anspruch 1 auf die Anbaufläche der Pflanzenkultur, auf das Saatgut der Pflanzen, oder auf die Pflanze selbst mit der Anwendung einer Verbindung der Formeln II bis VI gemäss Anspruch 1 kombiniert.

16. Verfahren gemäss Anspruch 15, dadurch gekennzeichnet, dass der Sulfonylharnstoff und das Antidot in einer Aufwandmenge von jeweils 0,005 bis 10 kg pro ha Kulturboden verwendet werden.

17. Verfahren gemäss Anspruch 15, dadurch gekennzeichnet, dass der Sulfonylharnstoff und das Antidot in einer Aufwandmenge von jeweils 0,05 bis 1 kg pro ha Kulturboden verwendet werden.

18. Verfahren gemäss Anspruch 15, dadurch gekennzeichnet, dass man einen Sulfonylharnstoff der Formel I verwendet, worin Y Wasserstoff bedeutet.

19. Verfahren gemäss Anspruch 15, dadurch gekennzeichnet, dass man die Anwendung eines Sulfonylharnstoffs ausgewählt aus der Gruppe N-[2-(2'-Chloräthoxy)-phenyl-sulfonyl]-N'-(4-methyl-6-methoxy-triazin-2-yl)-harnstoff, N-[2-(2'-Methoxyäthoxy)-phenyl-sulfonyl]-N'-(4-methyl-6-methoxy-triazin-2-yl)-harnstoff, N-[2-(2-Butenyloxy)-phenyl-sulfonyl]-N'-(4-methyl-6-methoxy-triazin-2-yl)-harnstoff, N-[2-(3-Trifluor-propen-1-yl)-phenyl-sulfonyl]-N'-(4-methyl-6-methoxy-triazin-2-yl)-harnstoff, N-(2,5-Dichlorphenyl-sulfonyl)-N'-(4-methyl-6-methoxypyrimidin-2-yl)-harnstoff, N-(2-Methoxycarbonyl-phenyl-sulfonyl)-N'-(4-methyl-6-difluormethoxy-pyrimidin-2-yl)-harnstoff, N-(2-Pentafluoräthoxyphenyl-sulfonyl)-N'-(4,6-dimethoxy-triazin-2-yl)-harnstoff, N-(2-Allyloxyphenyl-sulfonyl)-N'-(4-methyl-6-äthoxy-triazin-2-yl)-harnstoff, N-(2-Nitrophenyl-sulfonyl)-N'-(4-methyl-6-difluormethoxy-pyrimidin-2-yl)-harnstoff und N-(2-Methoxycarbonyl-phenyl-sulfonyl)-N'-(4-methyl-6-cyclopropyl-pyrimidin-2-yl)-harnstoff und N-(3-Methyl-3,4-dihydro-1,2-benzoxathiin-8-yl-sulfonyl)-N'-(4-methoxy-6-methyl-pyrimidin-2-yl)-harnstoff mit der Anwendung einer Verbindung der Formeln II bis VI gemäss Anspruch 1 kombiniert.

20. Verfahren gemäss Anspruch 15 zum Schützen von Kulturpflanzen vor Schäden, die bei der Applikation von Sulfonylharnstoffen der Formel I gemäss Anspruch 1 auftreten, dadurch gekennzeichnet, dass man

a) die Anbaufläche für die Pflanze vor oder während der Applikation des Sulfonylharnstoffs oder

b) den Samen oder die Stecklinge der Pflanzen oder die Pflanze selbst mit einer wirksamen Menge einer Verbindung der Formeln II bis VI gemäss Anspruch 1 behandelt.

FO 7.5 NU/hc*